# EUROPEAN PATENT APPLICATION

(11) **EP 3 829 040 A1**
(43) Date of publication of application: **02.06.2021**
(21) Application number: 19840416.2
(22) Date of filing: 14.06.2019
(51) Int. Cl.: H02K 11/026, H02K 13/10

(54) **MOTOR**

(30) Priority: 26.07.2018 KR 20180087168
(71) Applicant: LG Innotek Co., Ltd., Seoul 07796 (KR)
(72) Inventor: OK, Bit Na Ra, Seoul 07796 (KR)
(74) Representative: DREISS Patentanwälte PartG mbB
(86) International application number: PCT/KR2019/007181
(87) International publication number: WO 2020/022647

(57) **Abstract**

An embodiment relates to a motor comprising: a housing; a stator disposed in the housing; a rotor disposed in the stator; a shaft coupled to the rotor; a cover disposed on the housing; a core disposed at the cover; a plurality of brushes electrically connected to the core; and a plurality of coils wound on the core, wherein the core includes a first region, a second region connected to the first region and including a center, and a third region connected to the second region, the coil includes a first coil wound on the first region of the core and a second coil wound on the third region of the core, and the winding direction of the first coil is the same as the winding direction of the second coil with respect to the second region of the core. Therefore, the motor can prevent or minimize the effects of externally generated electromagnetic waves by using two coils wound on a single core.

## Description

### [Technical Field]

The present invention relates to a motor.

### [Background Art]

Generally, a motor includes a shaft which is rotatably disposed, a rotor coupled to the shaft, and a stator fixed inside a housing. In this case, the stator is installed to be spaced apart from the rotor by a gap along a circumference of the rotor.

In the motor, the rotation of the rotor is induced by an electrical interaction. In a case in which a coil is wound around the rotor, the motor may include a commutator and a brush to supply a current to the coil wound around the rotating rotor.

Generally, the commutator is coupled to the shaft and rotated in a state in which the commutator is connected to the coil. In addition, the brush is disposed on a cover to be able to come into contact with the commutator. Accordingly, electricity is supplied to the commutator through the brush.

In a case in which the motor is installed in a vehicle, there may be an electromagnetic interference problem between electronic components and the motor in the vehicle.

Accordingly, a choke coil, which is electrically connected to the brush to perform a function of an electromagnetic wave noise filter, is necessarily disposed in the motor.

In this case, since the choke coil should minimize noise while disposed in a limited space in the motor, it is important for the choke coil to have a high inductance. Here, the inductance is proportional to the number of turns of the choke coil.

Accordingly, a motor is required which allows the number of turns of a choke coil to increase.

### [Technical Problem]

The present invention is directed to providing a motor designed to increase the number of turns of a choke coil so as to prevent an electromagnetic interference problem.

Objectives to be solved through the present invention are not limited to the above-described objective, and other objectives which are not mentioned above will be clearly understood by those skilled in the art through the following specification.

### [Technical Solution]

One aspect of the present invention provides a motor including a motor including a housing, a stator disposed in the housing, a rotor disposed in the stator, a shaft coupled to the rotor, a cover disposed on the housing, a core disposed on the cover, a plurality of brushes electrically connected to the core, and a plurality of coils wound around the core, wherein the core includes a first region, a second region connected to the first region and including a center of the core, and a third region connected to the second region, the coils include a first coil wound around the first region of the core and a second coil wound around the third region of the core, and a winding direction of the first coil and a winding direction of the second coil are the same with respect to the second region of the core.

A length of a long axis of the core may be greater than the sum of lengths of long axes of the brushes.

The length of the long axis of the core may be greater than a radius of the cover.

The second region of the core may be a region around which the coil is not wound.

The motor may further include a first terminal and a second terminal which are disposed on the cover, wherein the plurality of brushes may include a first brush and a second brush, one side of the first coil may be connected to the first terminal, the other side of the first coil may be connected to the first brush, one side of the second coil may be connected to the second terminal, and the other side of the second coil may be connected to the second brush.

The first terminal and the second terminal may overlap the second region in a direction perpendicular to the shaft.

Each of the first terminal and the second terminal may include a groove, the one side of the first coil may be disposed in the groove of the first terminal, and the one side of the second coil may be disposed in the groove of the second terminal.

A pole of power applied to the first terminal and a pole of power applied to the second terminal may be different.

A distance from a center of the cover to the second terminal may be greater than a distance from the center of the cover to the first terminal.

The first brush may be disposed on a virtual line passing through a center of the cover, and the second brush may correspond to the first brush with respect to the center and may be disposed on the virtual line.

A long axis direction of the core may be parallel to the virtual line.

The cover may include a first guide protrusion close to the first region of the core and a second guide protrusion close to the third region of the core, and the first guide protrusion and the second guide protrusion may be symmetrical with respect to the second region of the core.

The number of the brushes may be N, and the number of cores identical to the core may be N/2. Here, N is an integer.

The core may be formed in a cylindrical shape.

The core may include a first surface disposed at one end thereof and having a circular shape and a second surface opposite to the first surface, disposed at the other end of the core, and having a circular shape, the first region may include the first surface, and the third region may include the second surface.

Another aspect of the present invention provides a motor including a stator, a rotor disposed in the stator, a shaft coupled to the rotor, a cover disposed on the rotor, a core coupled to the cover, brushes electrically connected to the core, and coils disposed around the core, wherein the core is a single core having a long axis, the coils include a first coil disposed at one side of the single core and a second coil separated from the first coil and disposed at the other side of the single core, and a direction of a magnetic field of the first coil is the same as a direction of a magnetic field of the second coil.

A length of the long axis of the single core may be greater than a radius of the cover, the brushes may include a first brush electrically connected to the first coil and a second brush electrically connected to the second coil, the first brush may overlap one end of the core in a direction perpendicular to a long axis of the core, and the second brush may overlap the other end of the core in the direction perpendicular to the long axis of the core.

The number of turns of the first coil may be in the range of 11 to 14.

### [Advantageous Effects]

In a motor according to embodiments, since two coils wound around a single core are used, an effect of an externally generated electromagnetic wave can be prevented or minimized. For example, in the motor, the single core can be used without increasing a size of a cover to increase the number of turns of the coil wound around the core. Accordingly, interference caused by the externally generated electromagnetic wave can be prevented or minimized in the motor.

Various useful advantages and effects of the present invention are not limited to the above-described contents and will be more easily understood in the description of specific embodiments of the present invention.

### [Description of Drawings]

FIG. 1 is a perspective view illustrating a motor according to an embodiment.
FIG. 2 is a cross-sectional view illustrating the motor according to the embodiment.
FIG. 3 is a bottom perspective view illustrating arrangement of a core, a coil, a brush, and a terminal on a cover of the motor according to the embodiment.
FIG. 4 is an exploded perspective view illustrating the arrangement of the core, the coil, the brush, and the terminal on the cover of the motor according to the embodiment.
FIG. 5 is a bottom view illustrating the arrangement of the core, the coil, the brush, and the terminal on the cover of the motor according to the embodiment.
FIG. 6 is a front view illustrating the arrangement of the core, the coil, the brush, and the terminal on the cover of the motor according to the embodiment.
FIG. 7 is a bottom view illustrating the cover of the motor according to the embodiment.
FIG. 8 is a cross-sectional view illustrating the cover of the motor according to the embodiment.
FIG. 9 is a table showing improvement of an inductance and an impedance of the motor according to the embodiment.
FIG. 10 is a set of graphs showing noise reduction of electromagnetic compatibility (EMC) of the motor according to the embodiment.

### [Modes of the Invention]

Hereinafter, exemplary embodiments of the present invention will be described in detail with reference to the accompanying drawings.

However, the technical spirit of the present invention is not limited to some embodiments which will be described and may be realized using various other embodiments, and at least one component of the embodiments may be selectively coupled, substituted, and used to realize the technical spirit within the range of the technical spirit.

In addition, unless clearly and specifically defined otherwise by context, all terms (including technical and scientific terms) used herein can be interpreted in a sense generally understandable to those skilled in the art, and meanings of generally used terms, such as those defined in commonly used dictionaries, will be interpreted in consideration of contextual meanings of the related technology.

In addition, the terms used in the embodiments of the present invention are considered in a descriptive sense and not to limit the present invention.

In the present specification, unless clearly indicated otherwise by the context, singular forms include the plural forms thereof, and in a case in which "at least one (or one or more) among A, B, and C" is described, this may include one or more combinations among all combinations which can be combined with A, B, and C.

In descriptions of components of the present invention, terms such as "first," "second," "A," "B," "(a)," and "(b)" can be used.

The terms are only to distinguish one element from another element, and an essence, order, and the like of the element are not limited by the terms.

In addition, it should be understood that, when an element is referred to as being "connected or coupled" to another element, such a description may include both a case in which the element is directly connected or coupled to another element, and a case in which the element is connected or coupled to another element with still another element disposed therebetween.

In addition, in a case in which any one element is described as being formed or disposed "on or under" another element, such a description includes both a case in which the two elements are formed or disposed to be in direct contact with each other and a case in which one or more other elements are interposed between the two elements. In addition, when one element is described as being formed "on or under" another element, such a description may include a case in which the one element is formed at an upper side or a lower side with respect to another element.

Hereinafter, embodiments will be described in detail with reference to the accompanying drawings, and components that are the same or correspond to each other are denoted by the same reference numeral regardless of the figure number, and redundant description thereof will be omitted.

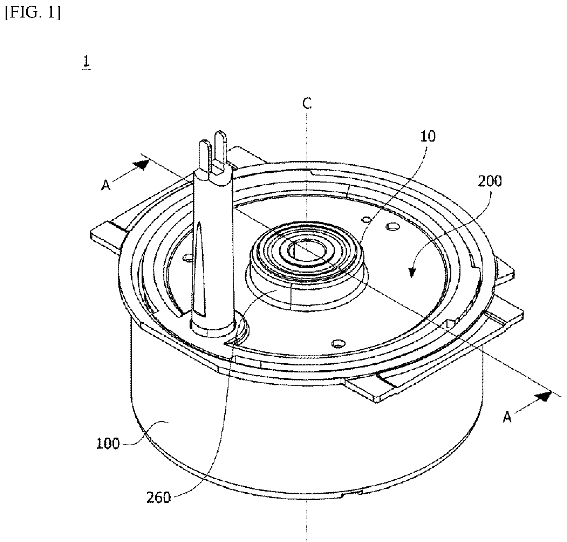

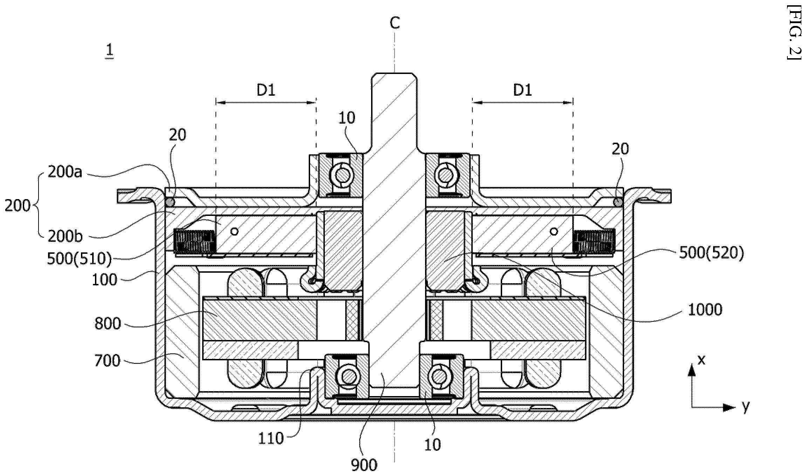

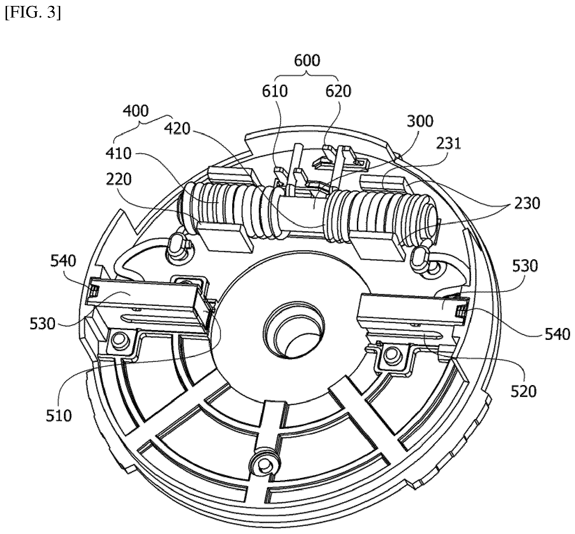

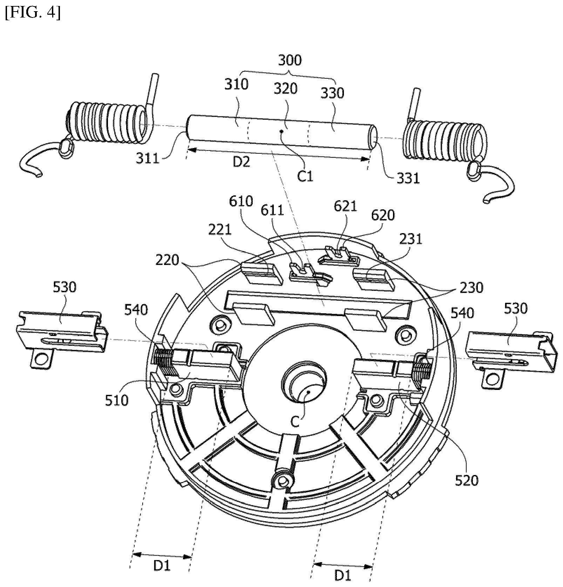

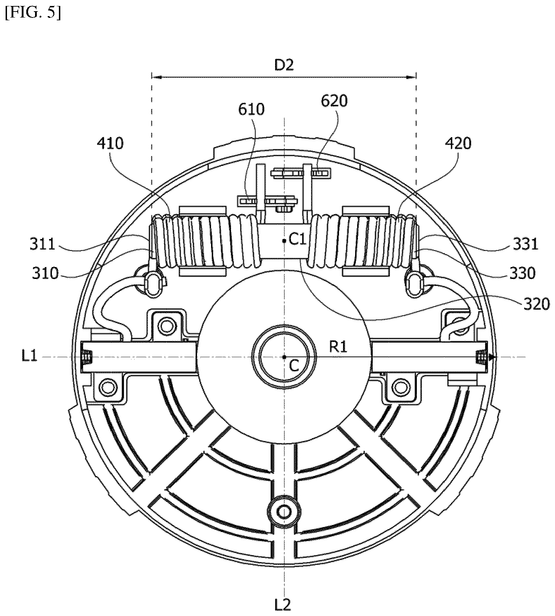

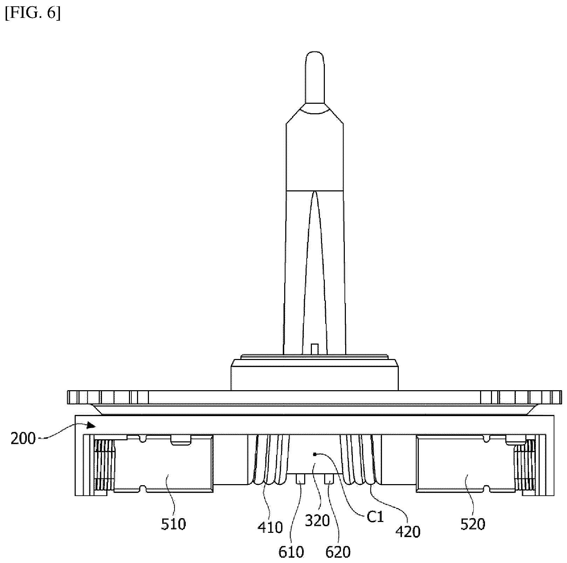

FIG. 1 is a perspective view illustrating a motor according to an embodiment, FIG. 2 is a cross-sectional view illustrating the motor according to the embodiment, FIG. 3 is a bottom perspective view illustrating arrangement of a core, a coil, a brush, and a terminal on a cover of the motor according to the embodiment, FIG. 4 is an exploded perspective view illustrating the arrangement of the core, the coil, the brush, and the terminal on the cover of the motor according to the embodiment, FIG. 5 is a bottom view illustrating the arrangement of the core, the coil, the brush, and the terminal on the cover of the motor according to the embodiment, and FIG. 6 is a front view illustrating the arrangement of the core, the coil, the brush, and the terminal on the cover of the motor according to the embodiment. Here, FIG. 2 is a cross-sectional view taken along line A-A of FIG. 1. In addition, an x-direction of FIG. 2 denotes a shaft direction, and a y-direction denotes a radial direction. In this case, the shaft direction is perpendicular to the radial direction. Here, the shaft direction may be a longitudinal direction of the shaft. In addition, a reference symbol C denotes a center of the motor 1.

Referring to FIGS. 1 to 6, a motor 1 according to the embodiment may include a housing 100, a cover 200 disposed on the housing 100, a core 300 disposed on the cover 200, a plurality of coils 400 wound around the core 300, a plurality of brushes 500 electrically connected to the core 300, a plurality of terminals 600 disposed on the cover 200 and electrically connected to one sides of the coils 400, a stator 700 disposed in the housing 100, a rotor 800 disposed inside the stator 700, a shaft 900 coupled to the rotor 800, and a commutator 1000 coupled to the shaft 900. Here, the term "inside" denotes a direction toward the center C of the motor 1 in the radial direction, and the term "outside" denotes a direction opposite to "inside."

Meanwhile, the motor 1 may include bearings 10 disposed on a circumferential surface of the shaft 900. Here, the bearings 10 are disposed on an upper portion and a lower portion of the shaft 900 to allow the shaft 900 to rotate.

The motor 1 may be a motor used in an electronic power steering (EPS) system. The EPS system may assist a steering force using a driving force of the motor to secure turning stability and quickly provide a restoring force of a vehicle so that a driver may safely drive the vehicle. Alternatively, the motor 1 may be a motor used in an anti-lock brake system (ABS). That is, the shaft 900 in the motor 1 may be connected to a brake system of a vehicle to transmit a force for controlling a braking force so as to solve an unstable steering problem generated when a brake pedal is pressed while the vehicle is traveling.

The housing 100, the cover 200, and the bearing 10 disposed in an upper portion of the cover 200 may form an exterior of the motor 1. Here, the cover 200 may be disposed to cover an open upper portion of the housing 100.

An accommodation space may be formed due to coupling of the housing 100 and the cover 200 therein. In addition, as illustrated in FIG. 2, the brush 500, the stator 700, the rotor 800, the shaft 900, the commutator 1000, and the like may be disposed in the accommodation space.

The housing 100 may accommodate the stator 700, the rotor 800, and the like therein. In this case, a shape or material of the housing 100 may be variously changed. For example, the housing 100 may be formed of a metal material which withstands even high temperatures well.

The housing 100 may be formed in a cylindrical shape.

In addition, the bearing 10 may be disposed on a lower surface of the housing 100. In this case, in order to arrange the bearing 10, the housing 100 may include a housing protrusion 110 protruding from the lower surface thereof in the shaft direction. Accordingly, a circumferential surface of the bearing 10 disposed on the circumferential surface of a lower side of the shaft 900 may be supported by the housing protrusion 110.

The cover 200 may be disposed on an open surface of the housing 100, that is, an upper portion of the housing 100, to cover an opening of the housing 100. In this case, the cover 200 may be coupled to the housing 100 in a press-fitting manner.

Referring to FIG. 2, the cover 200 may include an upper cover 200a and a lower cover 200b disposed under the upper cover 200a. In this case, the upper cover 200a may be formed of a metal material, and the lower cover 200b may be formed of a synthetic resin material such as plastic.

As illustrated in FIG. 2, an edge of the upper cover 200a may be bent upward. Accordingly, the edge of the upper cover 200a may be disposed to be spaced apart from the lower cover 200b at an edge of the cover 200.

Accordingly, a sealing member 20 may be disposed between the upper cover 200a and the lower cover 200b. In this case, the sealing member 20 may be disposed on an upper edge of the lower cover 200b. In addition, the sealing member 20 may be in contact with an inner circumferential surface of the housing 100.

Accordingly, the motor 1 may include the sealing member 20 disposed between the upper cover 200a and the lower cover 200b.

Here, the sealing member 20 may be formed of a rubber material, and a cross section thereof may be formed in an 'X' or 'D' shape. In the case in which the cross section of the sealing member 20 has the 'X' shape, end points forming the 'X' shape are in contact with the upper cover 200a and the inner circumferential surface of the housing 100. In addition, in the case in which the sealing member 20 is formed in the 'D' shape, when one portion including a curvature is disposed to be in contact with the upper cover 200a, and the other portion is disposed to be in contact with the inner circumferential surface of the housing 100, an effect in which a foreign material is prevented from being introduced may be further improved. However, the shape of the cross section of the sealing member 20 is not limited to the 'X' or 'D' shape. For example, an O-ring may also be disposed as the sealing member 20.

Accordingly, the sealing member 20 prevents liquid such as water from being introduced into the motor 1.

As described above, the cover 200 is illustrated in which the upper cover 200a and the lower cover 200b are divided but is not limited thereto. For example, the cover 200 may also be provided as one single product.

In addition, a hole may be formed in a central portion of the cover 200 to arrange the shaft 900. In this case, the shaft 900 may be coupled to the hole in a press-fitting manner.

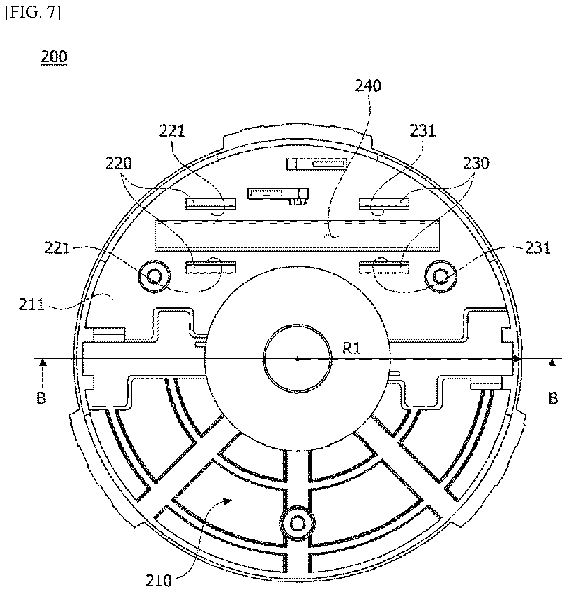

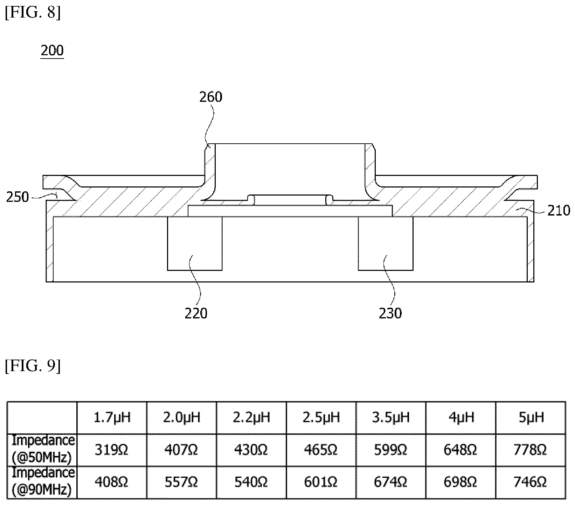

FIG. 7 is a bottom view illustrating the cover of the motor according to the embodiment, and FIG. 8 is a cross-sectional view illustrating the cover of the motor according to the embodiment. Here, FIG. 8 is a cross-sectional view taken along line B-B of FIG. 7.

Referring to FIG. 7, the cover 200 may include a cover body 210, first guide protrusions 220 protruding from a lower surface 211 of the cover body 210 in the shaft direction, and second guide protrusions 230 protruding from the lower surface of the cover body 210 in the shaft direction. Here, the cover body 210, the first guide protrusions 220, and the second guide protrusions 230 may be integrally formed.

The cover body 210 may be disposed on the open surface of the housing 100, that is, the upper portion of the housing 100 to cover the opening of the housing 100.

The cover body 210 may be formed in a disc shape having a predetermined radius R1. In this case, the radius R1 of the cover body 210 may be a radius of the cover 200.

As illustrated in FIG. 7, two first guide protrusions 220 may be disposed to face each other. In addition, two second guide protrusions 230 may be disposed to face each other. Accordingly, the first guide protrusions 220 and the second guide protrusions 230 may guide arrangement of the core 300 around which the coil 400 is wound.

Meanwhile, the cover 200 may include a guide groove 240 concavely formed between the first guide protrusions 220 and between the second guide protrusions 230. For example, the guide groove 240 may be concavely formed in the lower surface 211 of the cover body 210. In this case, the guide groove 240 may be formed to extend in a direction which is the same as a long axis direction of the core 300.

Accordingly, the guide groove 240 may guide arrangement of the core 300 around which the coil 400 is wound.

In addition, the cover 200 may include a first groove 250 concavely formed inward from an outer circumferential surface thereof. In addition, the sealing member 20 may be disposed in the first groove 250.

In addition, the cover 200 may include a protrusion 260 protruding from an upper surface thereof in the shaft direction. In addition, the bearing 10 may be disposed inside the protrusion 260. As illustrated in FIG. 2, since the bearing 10 is disposed between the protrusion 260 and the shaft 900, the shaft 900 may be disposed to be rotatable with respect to the cover 200.

The protrusion 260 may be disposed close to an outer side of the hole. In addition, an inner diameter of the protrusion 260 may be greater than an inner diameter of the hole.

The core 300 may be disposed under the cover 200.

The core 300 may be a single core having a long axis. As illustrated in FIG. 4, the core 300 may be formed in a cylindrical shape. Accordingly, the long axis direction of the core 300 may be a longitudinal direction of the core 300. In this case, the core 300 may be formed of a ferrite material.

Referring to FIG. 4, the core 300 may include a first region 310, a second region 320 connected to the first region 310 and including a center C1, and a third region 330 connected to the second region 320 according to winding of the coil 400. In this case, a first coil 410 may be wound around the first region 310 of the core 300, and a second coil 420 may be wound around the third region 330 of the core 300. Here, the second region 320 is a region around which the coil 400 is not wound. In addition, the center C1 may be a center of a length of the core 300 in the long axis direction thereof.

The core 300 may include a circular shaped first surface 311 disposed at one end of the core 300 and a circular shaped second surface 331 disposed at the other end thereof to be opposite to the first surface 311. In this case, the first region 310 may include the first surface 311, and the third region 330 may include the second surface 331. That is, the core 300 may include the first surface 311 and the second surface 331 which are disposed in opposite directions in the long axis direction.

Referring to FIG. 4, a length D2 of a long axis of the core 300 may be greater than the sum of lengths D1 of long axes of the brushes 500.

Referring to FIG. 5, the length D2 of the long axis of the core 300 may be greater than the radius R1 of the cover 200.

In addition, as illustrated in FIG. 5, a virtual line L1 passing through a center C of the cover 200 and centers of the brushes 500 may be formed. In addition, the line L1 may pass through the center C of the cover 200. In this case, the virtual line L1 may be disposed parallel to the long axis direction of the core 300.

That is, the long axis direction of the core 300 may be parallel to a long axis direction (longitudinal direction) of the brush 500.

The coil 400 may be wound around the core 300.

The coil 400 may include the first coil 410 wound around the first region 310 of the core 300 and the second coil 420 wound around the third region 330 of the core 300. In this case, a winding direction of the first coil 410 and a winding direction of the second coil 420 may be the same with respect to the second region 320 of the core 300.

That is, the coil 400 may include the first coil 410 disposed at one side of the single core and the second coil 420 separated from the first coil 410 and disposed at the other side of the single core. In this case, a direction of a magnetic field of the first coil 410 may be the same as a direction of a magnetic field of the second coil 420 in consideration of interference between the magnetic fields generated by the first coil 410 and the second coil 420 when power is applied to each of the first coil 410 and the second coil 420.

In the motor 1 according to the embodiment, the number of turns may be greater than that of the conventional case by 2 to 3 per coil 400, wherein the coils are each wound one of two cores in the conventional case. For example, the number of turns of each of the first coil 410 and the second coil 420 may be greater than that thereof by 2 to 3. Accordingly, the number of turns of the coil 400 around the core 300 may be greater than that thereof by a total of 4 to 6.

The number of turns of the first coil 410 around the core 300 may be in the range of 11 to 14. In addition, the number of turns of the second coil 420 around the core 300 may be in the range of 11 to 14.

Accordingly, since an inductance is proportional to the square of the number of turns of the coil 400, an inductance of the motor 1 is improved due to an increase in the number of turns of the coil 400. For example, when a diameter of the core 300 is 6.0 mm, a length thereof is 19 mm, and a diameter of the coil 400 is 1.5 mm, the inductance of the motor 1 is improved by about 27 to 64% when compared to the conventional case in which coils are each wound around one of two cores.

FIG. 9 is a table showing improvement of an inductance and an impedance of the motor according to the embodiment.

As illustrated in FIG. 9, since the number of turns of each of the first coil 410 and the second coil 420 wound in the motor 1 is 2 to 3, it may be seen that the inductance and the impedance thereof are improved. Particularly, the inductance of the motor 1 is improved by 2.5 to 5 µH.

Here, in the case of the conventional motor which is provided as a comparative example of the motor 1 and in which the coils are each wound around one of two cores, the number of turns of each of the coils wound around one of the cores is 10.5, and thus, an inductance provided by the conventional motor is 2.2 µH.

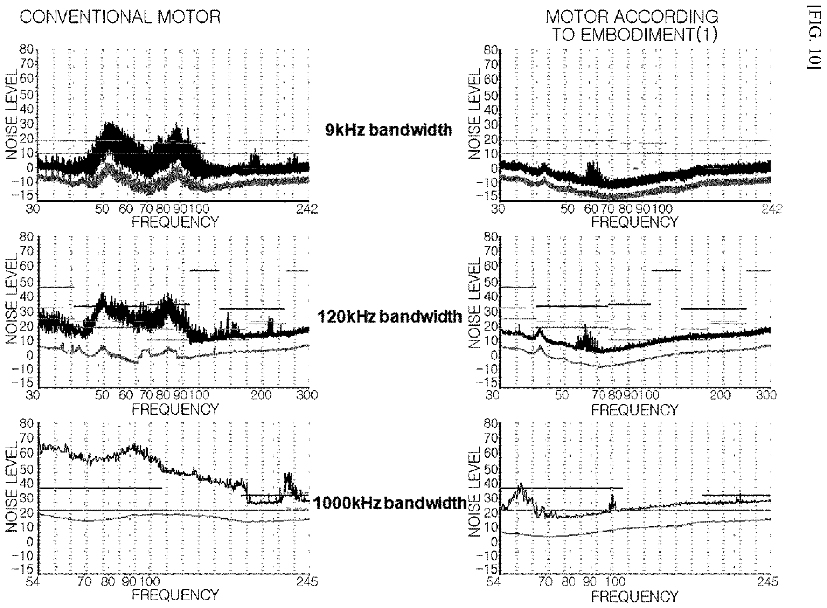

FIG. 10 is a set of graphs showing noise reduction of electromagnetic compatibility (EMC) of the motor according to the embodiment. In FIG. 10, a horizontal axis denotes a frequency, and a vertical axis denotes a noise level.

Referring to FIG. 10, it may be seen that noise of the EMC of the motor 1 is reduced. For example, it may be seen that the noise in a frequency band of 30 to 300 MHz is reduced by 10 to 20 dB.

As illustrated in FIGS. 3 and 5, the first coil 410 and the second coil 420, which are wound around the core 300, may be disposed around the core 300 to be spaced apart from each other in the long axis direction of the core 300.

In addition, one side of the core 300 around which the first coil 410 and the second coil 420 are wound may be disposed between the first guide protrusions 220, and the other side thereof may be disposed between the second guide protrusions 230.

Referring to FIG. 5, the first guide protrusion 220 and the second guide protrusion 230 may be symmetrically disposed with respect to the second region 320 of the core 300. As illustrated in FIG. 5, the first guide protrusion 220 and the second guide protrusion 230 may be symmetrically disposed with respect to the second region 320 of the core 300, that is, a virtual line L2 connecting the center C and the center C1 of the core 300 in the long axis direction thereof.

The core 300 around which the first coil 410 and the second coil 420 are wound may be coupled to the first guide protrusions 220 and the second guide protrusions 230 in a press-fitting manner. Accordingly, the first coil 410 wound around the core 300 may be in contact with inner surfaces 221 of the first guide protrusions 220. In addition, the second coil 420 wound around the core 300 may be in contact with inner surfaces 231 of the second guide protrusion 230.

In this case, a portion of the core 300 around which the first coil 410 and the second coil 420 are wound may be disposed in the guide groove 240.

The brush 500 may be disposed under the cover 200. In this case, the plurality of brushes 500 may be provided, and one side of each of the plurality of brushes 500 may come into contact with the commutator 1000. That is, in a case in which N brushes 500 are disposed under the cover 200, N/2 cores 300 may be disposed. Here, N is an integer.

For example, two brushes 500 share one core 300. Accordingly, two coils 400 may be disposed around one core 300.

The brush 500 may be formed in a rectangular hexahedron shape extending in one direction. Accordingly, the long axis direction of the brush 500 may be the longitudinal direction of the brush.

Referring to FIGS. 3 to 5, the first brush 510 and the second brush 520 may be disposed to face each other around the center C. That is, one surface of the first brush 510 in a long axis direction thereof and one surface of the second brush 520 in a long axis direction thereof may be disposed to face and be spaced apart from each other.

In this case, the first brush 510 and the second brush 520 may be disposed on the virtual line L1 passing through the center C in the radial direction. For example, when the first brush 510 is disposed on the virtual line L1 passing through the center C of the cover 200, the second brush 520 corresponds to the first brush 510 with respect to the center C and is disposed on the virtual line L1.

One side of the first brush 510 may be connected to one end portion of the first coil 410. In addition, one side of the second brush 512 may be connected to one end portion of the second coil 420.

Referring to FIG. 6, the first brush 510 may overlap one end of the core 300 in a direction perpendicular to the long axis of the core 300. In addition, the second brush 520 may be disposed to overlap the other end of the core 300 in the direction perpendicular to the long axis of the core 300. When viewed in the radial direction, a portion of the first brush 510 may be disposed to overlap one end of the core 300. In addition, a portion of the second brush 520 may be disposed to overlap the other end of the core 300.

Accordingly, a portion of the first brush 510 may be disposed to overlap a portion of the first coil 410 in the radial direction. In addition, the second brush 520 may be disposed to overlap a portion of the second coil 420 in the radial direction.

Meanwhile, the motor 1 may include brush holders 530. In this case, the brush holders 530 may be disposed to cover the brushes 500. For example, the brush holders 530 may be disposed on the cover 200 to cover the first brush 510 and the second brush 520.

In addition, an elastic member 540 such as a spring is disposed in the brush holder 530 and presses one side of the brush 500. Accordingly, the other side of the brush 500 comes into contact with the commutator 1000. For example, the elastic member 540 may be disposed to press each of the first brush 510 and the second brush 520.

The terminal 600 may be disposed under the cover 200. In this case, the plurality of terminals 600 may be provided.

Referring to FIG. 3, the terminals 600 may include a first terminal 610 and a second terminal 620.

The first terminal 610 may be electrically connected to one side of the first coil 410. Accordingly, one side of the first coil 410 is connected to the first terminal 610, and the other side of the first coil 410 is connected to the first brush 510. In this case, the first terminal 610 may include a groove 611. Accordingly, one side of the first coil 410 may be disposed in the groove 611 of the first terminal 610. Here, the groove 611 formed in the first terminal 610 may be referred to as a first groove.

The second terminal 620 may be electrically connected to one side of the second coil 420. Accordingly, one side of the second coil 420 is connected to the second terminal 620, and the other side of the second coil 420 is connected to the second brush 520. In this case, the second terminal 620 may include a groove 621. Accordingly, one side of the first coil 410 may be disposed in the groove 621 of the second terminal 620. Here the groove 621 formed in the second terminal 620 may be referred to as a second groove.

Referring to FIG. 5, a distance from the center C of the cover 200 to the second terminal 620 may be greater than a distance from the center C of the cover 200 to the first terminal 610.

Referring to FIG. 6, the first terminal 610 and the second terminal 620 may be disposed to overlap the second region 320 of the core 300 in a direction perpendicular to the shaft 900. When viewed in the radial direction, the first terminal 610 and the second terminal 620 may be disposed to overlap the second region 320 of the core 300.

Meanwhile, a pole of power applied to the first terminal 610 and a pole of power applied to the second terminal 620 may be different. For example, a "+" pole may be applied to the first terminal 610, and a "-" pole may be applied to the second terminal 620.

The stator 700 electrically interacts with the rotor 800 to induce rotation of the rotor 800. The stator 700 is coupled to an inside of the housing 100. In addition, the stator 700 may include a plurality of magnets. The magnets generate a rotating magnetic field with a coil wound around the rotor 800. In each of the magnets, an N-pole and an S-pole may be alternately disposed around the center C in a circumferential direction thereof.

Meanwhile, the stator 700 may include a stator core in order to arrange the magnet but is not necessarily limited thereto. The stator core may be manufactured by coupling a plurality of divided cores or manufactured in a single core form formed as one barrel.

The rotor 800 is disposed inside the stator 700. That is, the stator 700 may be disposed outside the rotor 800.

The rotor 800 may include a rotor core and the coil. The rotor core may be formed in a form in which a plurality of thin steel plates are stacked but is not necessarily limited thereto. For example, the rotor core may also be formed as one single product.

A plurality of teeth may be formed to protrude from an outer circumferential surface of the rotor core. The tooth may be disposed to protrude in the radial direction from a center of the rotor 800. In this case, the tooth may be disposed to face the magnet. In addition, the coil is wound around each of the teeth. In this case, an insulator may be installed on the tooth. The insulator insulates the stator core from the coil.

When a current is supplied to the coil, an electrical interaction is induced between the coil and the magnet so that the rotor 800 may be rotated. In the case in which the rotor 800 is rotated, the shaft 900 is also rotated with the rotor 800. In this case, the shaft 900 may be supported by the upper bearings 10 disposed at an upper side and the lower side thereof.

The commutator 1000 is coupled to the shaft 900. In addition, the commutator 1000 may be disposed above the rotor 800. For example, the commutator 1000 may be disposed between the cover 200 and the rotor 800. In addition, the commutator 1000 is electrically connected to the coil of the rotor 800.

While the invention has been shown and described with reference to the exemplary embodiment thereof, it will be understood by those skilled in the art that various changes in form and details may be made therein without departing from the spirit and scope of the invention as defined by the appended claims.

### [Reference Numerals]

| | |
|---|---|
| 1: MOTOR | 100: HOUSING |
| 200: COVER | 210: COVER BODY |
| 220: FIRST GUIDE PROTRUSION | |
| 230: SECOND GUIDE PROTRUSION | |
| 300: CORE | 310: FIRST REGION |
| 311: FIRST SURFACE | 320: SECOND REGION |
| 330: THIRD REGION | 331: SECOND SURFACE |
| 400: COIL | 410: FIRST COIL |
| 420: SECOND COIL | 500: BRUSH |
| 510: FIRST BRUSH | 520: SECOND BRUSH |
| 600: TERMINAL | 610: FIRST TERMINAL |
| 620: SECOND TERMINAL | 700: STATOR |
| 800: ROTOR | 900: SHAFT |
| 1000: COMMUTATOR | |

## Claims

1. A motor comprising:
a housing;
a stator disposed in the housing;
a rotor disposed in the stator;
a shaft coupled to the rotor;
a cover disposed on the housing;
a core disposed on the cover;
a plurality of brushes electrically connected to the core; and
a plurality of coils wound around the core,
wherein the core includes a first region, a second region connected to the first region and including a center of the core, and a third region connected to the second region,
the plurality of coils include a first coil wound around the first region of the core and a second coil wound around the third region of the core, and
a winding direction of the first coil and a winding direction of the second coil are the same with respect to the second region of the core.

2. The motor of claim 1, wherein a length of a long axis of the core is greater than a sum of lengths of long axes of the brushes.

3. The motor of claim 2, wherein the length of the long axis of the core is greater than a radius of the cover.

4. The motor of claim 1, wherein the second region of the core is a region around which the coil is not wound.

5. The motor of claim 1, further comprising a first terminal and a second terminal which are disposed on the cover,
wherein the plurality of brushes include a first brush and a second brush, one side of the first coil is connected to the first terminal,
the other side of the first coil is connected to the first brush,
one side of the second coil is connected to the second terminal, and the other side of the second coil is connected to the second brush.

6. The motor of claim 5, wherein the first terminal and the second terminal overlap the second region in a direction perpendicular to the shaft.

7. The motor of claim 5, wherein:
each of the first terminal and the second terminal includes a groove;
the one side of the first coil is disposed in the groove of the first terminal; and
the one side of the second coil is disposed in the groove of the second terminal.

8. The motor of claim 7, wherein a pole of power applied to the first terminal and a pole of power applied to the second terminal are different.

9. The motor of claim 5, wherein a distance from a center of the cover to the second terminal is greater than a distance from the center of the cover to the first terminal.

10. The motor of claim 5, wherein:
the first brush is disposed on a virtual line passing through a center of the cover; and
the second brush corresponds to the first brush with respect to the center and is disposed on the virtual line.

11. The motor of claim 10, wherein a long axis direction of the core is parallel to the virtual line.

12. The motor of claim 1, wherein:
the cover includes a first guide protrusion close to the first region of the core and a second guide protrusion close to the third region of the core; and
the first guide protrusion and the second guide protrusion are symmetrical with respect to the second region of the core.

13. The motor of claim 1, wherein:
the number of the brushes is N; and
the number of cores identical to the core is N/2.

14. The motor of claim 1, wherein the core is formed in a cylindrical shape.

15. The motor of claim 14, wherein:
the core includes a first surface disposed at one end thereof and having a circular shape and a second surface opposite to the first surface, disposed at the other end of the core, and having a circular shape;
the first region includes the first surface; and
the third region includes the second surface.

16. A motor comprising:
a stator;
a rotor disposed in the stator;
a shaft coupled to the rotor;
a cover disposed on the rotor;
a core coupled to the cover;
a plurality of brushes electrically connected to the core; and
a plurality of coils disposed around the core,
wherein the core includes a single core having a long axis,
the plurality of coils include a first coil disposed at one side of the single core and a second coil separated from the first coil and disposed at the other side of the single core, and
a direction of a magnetic field of the first coil is the same as a direction of a magnetic field of the second coil.

17. The motor of claim 16, wherein:
a length of the long axis of the single core is greater than a radius of the cover;
the plurality of brushes include a first brush electrically connected to the first coil and a second brush electrically connected to the second coil;
the first brush overlaps one end of the core in a direction perpendicular to a long axis of the core; and
the second brush overlaps the other end of the core in the direction perpendicular to the long axis of the core.

18. The motor of claim 16, wherein the number of turns of the first coil is in a range of 11 to 14.
